## Europäisches Patentamt
## European Patent Office
## Office européen des brevets

(11) Veröffentlichungsnummer: **0 229 207**
**B1**

(12) **EUROPÄISCHE PATENTSCHRIFT**

(45) Veröffentlichungstag der Patentschrift:
05.12.90

(51) Int. Cl.⁵: **A61C 17/02**

(21) Anmeldenummer: **86100365.5**

(22) Anmeldetag: **13.01.86**

(54) **Handstück für Mundduschen.**

(43) Veröffentlichungstag der Anmeldung:
**22.07.87 Patentblatt 87/30**

(45) Bekanntmachung des Hinweises auf die Patenterteilung:
**05.12.90 Patentblatt 90/49**

(84) Benannte Vertragsstaaten:
**AT CH DE FR LI**

(56) Entgegenhaltungen:
**EP-A- 0 163 156**
**DE-A- 3 225 918**
**DE-A- 3 304 092**
**DE-C- 1 083 497**
**DE-C- 1 087 319**
**FR-A- 2 556 955**

(73) Patentinhaber: **Petz, Günter, Flachslander Strasse 8, D-8500 Nürnberg(DE)**

(72) Erfinder: **Petz, Günter, Flachslander Strasse 8, D-8500 Nürnberg(DE)**

(74) Vertreter: **Göbel, Matthias, Dipl.-Ing., Pruppacher Hauptstrasse 5-7, D-8501 Pyrbaum-Pruppach(DE)**

ACTORUM AG

## Beschreibung

Die Erfindung betrifft ein Handstück für Mundduschen mit einem Ventilkörper und einem an dem Ventilkörper dreh- und abnehmbar dicht ansteckbaren Düsenrohr mit Einzelstrahl- und Mehrstrahlaustritten für die Duschflüssigkeit sowie einer mittels eines Stellschiebers betätigbaren Steuereinrichtung, die wahlweise getrennte Abläufe für den Einzelstrahlaustritt oder die Mehrstrahlaustritte an einem gemeinsamen Zulauf anlegt bzw. vom Zulauf trennt und bei dem der Stellschieber mittels eines Nockens in den Offenstellungen der Verschlußstücke ein Halteglied in eine Ausnehmung des Düsenrohres einschwenkt und in der Schließstellung aus der Ausnehmung freigibt.

Bei einem bekannten Griffteil eines Handgerätes für die Zahn- und Mundpflege (DE-A 3 225 918) ist ein einziger Flüssigkeitsaustritt durch einen Schieber kontrollierbar, der durch eine Anformung am Stellschieber entgegen Federkraft in den Zulauf einschiebbar ist. Abgesehen davon, daß bei diesem Griffteil verschiedene Flüssigkeitsaustritte nicht vorgesehen sind, ergibt der Schieber auch Dichtprobleme und weiter führt die Federkraft zu einer komplizierten Ausbildung und Montage des Griffteils. Fernerhin macht das Halteglied für das Düsenrohr einen zusätzlichen Bauteil im Griffteil erforderlich. Bei einem weiter bekannten Handstück für Mundduschen (FR-A 2 556 955) ist zwar der Zulauf an zwei getrennte Abläufe des Düsenrohres anlegbar, jedoch bedarf es hierzu einer durch den Stellschieber drehbaren bauaufwendigen Steuerscheibe und zur Fixierung des Düsenrohres der Betätigung eines in einer Handstücknut frei beweglichen Stiftes. Bei diesem Handstück wirft die Steuerscheibe ebenfalls Dichtprobleme auf, weil Abnutzungen im Bereich der Trennungsfläche von Steuerscheibe und Aufnahmebohrung unbeabsichtigte Durchlässe bilden. Außerdem bedarf die Halterung des Stiftes im Handstück einen komplizierten Bauaufwand.

Es ist Aufgabe der Erfindung, Maßnahmen zum dichten Schließen der Abläufe zu schaffen und das Düsenrohr in den Verbindungsstellungen von Zulauf und Abläufen einfach und sicher am Ventilkörper zu fixieren.

Der Erfindung gemäß hat diese Aufgabe dadurch eine Lösung gefunden, daß die Abläufe für den Einzelstrahl- und Mehrstrahlaustritten durch als Steuereinrichtung dienende verschiebliche Verschlußstücke kontrollierbar sind, daß die Verschlußstücke durch ein durch den Stellschieber verschiebliches Kurvenstück in der Schließstellung haltbar bzw. unabhängig nacheinander in die Offenstellungen bringbar sind, durch einen ebenen Streifenteil mit einer im wesentlichen v-förmigen Ausbiegung (7') gebildet ist, deren Höhe dem maximalen Hub der Ventilstößel (10, 11) entspricht und in Schlitzungen (23) den Ventilstößel (10, 11) geführt ist, und daß der Stellschieber mittels des durch ihn verschieblichen Nockens einen am Ventilkörper angelenkten Sperrhebel zur Fixierung oder Freigabe des Düsenrohres am oder vom Ventilkörper, betätigt.

Die beliebig zylindrisch oder kegelig bzw. kugelförmig gestalteten Verschlußstücke gestatten durch einfache Verschiebebewegungen zu ihren Sitzflächen sichere Abdichtungen des Zulaufs mit dem einen oder anderen Ablauf mit geringem baulichen Aufwand zu bewirken, während der Stellschieber über den Nocken entsprechend den Stellungen der Verschlußstücke das Düsenrohr am Ventilkörper festlegt bzw. freigibt, so daß unter der Wirkung einer quer am Düsenrohr wirksamwerdenden Komponente der Zugkraft der Sperrhebel zur Abnahme des Düsenrohres frei zurück schwenkbar ist.

In Ausgestaltung des Handstücks ist vorgesehen das Kurvenstück und den Nocken an einer Führungsschiene auszubilden, die mit dem Stellschieber fest verbunden ist. Die Verbindung kann beliebig, z. B. über einen durch eine Schlitzung das Handstück durchsetzenden Zapfen erfolgen. Der Zapfen trägt dabei noch zu einer verdrehsicheren Führung für den Stellschieber bei.

Das Kurvenstück ist durch einen ebenen Streifenteil mit einer im wesentlichen V-förmigen Ausbiegung gebildet, deren Höhe dem maximalen Hub der Verschlußstücke entspricht. Es entspricht dem Erfindungsgedanken, auch zwei streifenförmige Kurvenstücke nebeneinander anzuordnen, die zueinander versetzt je eine Ausbiegung aufweisen und getrennt und unabhängig die Verschlußstücke in Schließstellung halten bzw. in Offenstellung verbringen. Außerdem ist denkbar, ein einziges Kurvenstück mit zwei V-förmigen Ausbiegungen vorzusehen, von denen jeweils eine auf ein Verschlußstück zu Öffnungsbewegungen desselben einwirken kann.

In weiterer Ausgestaltung ist vorgesehen, den Nocken durch einen Streifenteil zu bilden, der sich in den Schließstellungen der Verschlußstücke den Sperrhebel an mittels einer dem dem Sperrhebel zugewandte Ende angeordnete schrägen oder bogenförmigen Anlauffläche betätigt. Die Anlauffläche führt zu einem stroßfreien Verschwenken des Sperrhebels.

Eine besonders einfache Ausgestaltung des Handstücks ergibt sich dann, wenn zwischen dem Kurvenstück und den Verschlußstücken Betätigungsstifte ausgebildet sind, die die Schlitzungen tragen in die das Kurvenstück geführt wird. Die Schlitzungen können mit schrägen Anläufen versehen sein, wodurch ein verklemmungsfreies Führen der Verschlußstücke gewährleistet ist.

Es versteht sich, daß die Betätigungsstifte mit den Verschlußstücken fest verbunden sein können, wodurch die Öffnungs- und die Schließbewegungen der Verschlußstücke durch vom Kurvenstück aufbringbare Kräfte bewirkt werden. Es besteht aber auch die Möglichkeit, die Betätigungsstifte getrennt von den Verschlußstücken auszubilden und diese frei auf den Verschlußstücken abstützbar anzuordnen. Dies führt dazu, daß bei Zuordnung der Ausbiegung der eine oder andere Betätigungsstift vom zugeordneten Verschlußstück abgehoben wird, wodurch dieses unter der Wirkung des Zulaufsdrucks vom Ventilsitz selbsttätig abhebbar ist. Außerdem ist noch vorgesehen, den Sperrhebel als Winkelhebel auszubilden, der in den Offenstellungen der Verschlußstücke mit einem Hebelarm auf den Nokken aufschiebbar und mit dem anderen Hebelarm in die Düsenrohrausnehmung zur Fixierung des Düsenrohres einschwenkbar ist.

Als vorteilhaft hat sich außerdem gezeigt, wenn der Ventilkörper durch mehrere axial miteinander fest aneinandergefügte Ventilkörperteile gebildet ist, von denen einer einen Anschlußnippel für den Zulauf, ein anderer die Verschlußstücke aufnimmt, während weitere den Sperrhebel tragen und ein Teilstück einer zylindrischen Aufnahme für das Düsenrohr bzw. ein weiteres Teilstück der zylindrischen Aufnahme für das Düsenrohr aufweisen. Der Ventilkörper ist so einfach und leicht zugänglich herstellbar, was sich auch auf einfache Ausgestaltungen für die Spritz werkzeuge auswirkt. Der Ventilkörper kann in das Handstück einfach und sicher einsteckbar sein, wenn das Handstück aus Schalenteilen aufrichtbar ist in die der Ventilkörper einsteck- und fixierbar ist. Die beiden Schalenteile sind durch abspreizbar hinter Stützflächen des jeweils anderen Schalenteils greifende Rastenkörper aneinander festlegbar.

Die Erfindung ist anhand eines Ausführungsbeispiels in der Zeichnung verdeutlicht. Es zeigen:

Fig. 1 einen Längsschnitt eines Handstücks,

Fig. 2 einen weiteren Längsschnitt eines Handstücks,

Fig. 3 einen Schnitt nach der Linie III/III der Fig. 2 und

Fig. 4 einen Schnitt nach der Linie III/III der Fig. 2 mit einem in Sperrstellung für das Düsenrohr gebrachten Sperrhebel.

In den Figuren ist mit 1 ein Handstück bezeichnet, das durch zwei zusammenfügbare Schalenteile 1' gebildet ist. Die beiden Schalenteile 1' können mittels Zapfen (nicht gezeigt), die in ösenartige Anformungen 2 des jeweils anderen Schalenteils 1' eingreifen, aneinander festgelegt sein. Am Handstück 1 ist ein Stellschieber 3 verschieblich angeordnet, der mittels eines in einer Schlitzung 4 geführten Zapfens 5 mit einer Führungsschiene 6 in fester Verbindung steht. Die Führungsschiene 6 nimmt beim Ausführungsbeispiel ein Kurvenstück 7 auf, das durch einen Streifenteil mit einer im wesentlichen V-förmigen Ausbiegung 7' gebildet ist. Dem Kurvenstück 7 sind Betätigungsstifte 8 und 9 für verschiebliche Verschlußstücke 10 und 11 zugeordnet, die einen gemeinsamen Zulauf 12 und Abläufe 13 und 14 kontrollieren. Die Abläufe 13 und 14 stehen bekannterweise mit einem im Düsenrohr 15 ausgebildeten Einzelstrahlaustritt bzw. Mehrstrahlaustritten (nicht ge zeigt) in Verbindung. Das Düsenrohr 15 ist auf einen Ventilkörper 16 frei drehbar aufgesteckt, der die Verschlußstücke 10, 11 sowie den Zulauf 12 und die Abläufe 13, 14 aufnimmt. Das Düsenrohr 15 weist eine ringförmige Ausnehmung 17 auf in die ein bei 18 schwenkbeweglich gelagerter, abgewinkelter Sperrhebel 19 mit seinem Hebelarm 19' ein-bring- bzw. aushebbar ist. Der Hebelarm 19" des Sperrhebels 19 ragt in den Bewegungsweg eines an der Führungsschiene 6 vorgesehenen Nockens 20 ein, der an dem dem Sperrhebel zugewandten Ende eine bogenförmige Anlauffläche 25 aufweist.

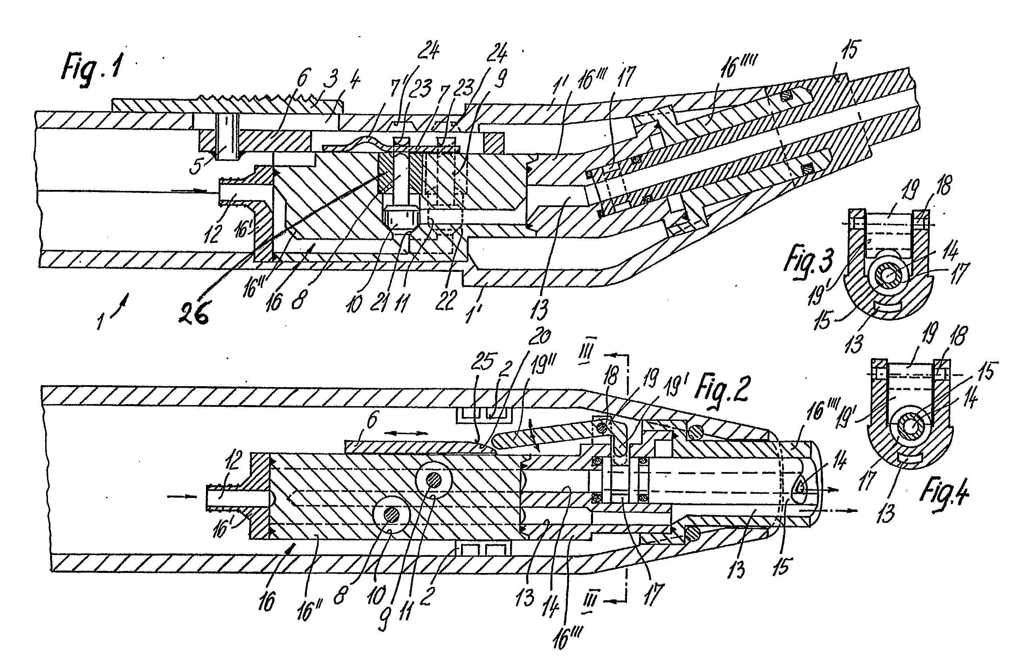

In Fig. 1 befindet sich der Stellschieber 3 in einer Endstellung. In dieser Stellung nimmt das Kurvenstück 7 die Schließstellungen für die Verschlußstücke 10, 11 ein. Hierbei sind durch das Kurvenstück 7 die Verschlußstücke 10, 11 an ihren Sitzen 21, 22 angelegt wodurch Zulauf 12 und Abläufe 13, 14 voneinander getrennt sind. Durch Verschieben des Stellschiebers 3 in Richtung auf die rechte Blattseite bewegt sich das Kurvenstück 7 mit der Ausbiegung 7' innerhalb von Schlitzungen 23 der Betätigungsstifte 8, 9 und bewirkt zunächst ein Abheben des Verschlußstücks 10 vom Ventilsitz 21, wodurch der Zulauf 12 mit dem Ablauf 13 in Verbindung gebracht ist. Ein behinderungsfreies Abheben der Verschlußstücke 10, 11 ist durch Ausnehmungen 24 im Schalenteil 1' gewährleistet. Gleichzeitig schwenkt der Nocken 20 den Hebelarm 19' des Sperrhebels 19 in die ringförmige Ausnehmung 17 (gestrichelte Stellung der Fig. 2 und Fig. 4), wodurch das Düsenrohr 15 am Ventilkörper 16 fixiert, jedoch drehbar bleibt. Wird ein Flüssigkeitsaustritt über den Ablauf 14 gewünscht, so ist der Stellschieber 3 weiter auf die rechte Blattseite zu bewegen, wodurch zunächst das Verschlußstück 10 an den Sitz 21 angelegt und durch Zusammenwirken der Ausbiegung 7' mit dem Betätigungsstift 9 ein Abheben des Verschluß stückes 11 vom Sitz 22 bewirkt wird. In dieser Stellung des Stellschiebers 3 verbleibt der Hebelarm 19 des Sperrhebels 9 in Sperrstellung für das Düsenrohr 15.

Zur Einnahme der Stopstellung ist der Stellschieber 3 in die gezeigte Stellung zurückzubewegen. Hierbei hält das Kurvenstück 7 beide Verschlußstücke 10, 11 an ihren Sitzen 21, 22 und durch Fortbewegung des Nockens 20 vom Sperrhebel 19 ist diesem Gelegenheit gegeben bei Auftreffen einer quer am Düsenrohr 15 wirksamwerdenden Komponente der Zugkraft, z.B. zum Zwecke der Abnahme des Düsenrohrs 15 vom Ventilkörper 16, in die in Fig. 2 und 3 gezeigten Stellungen zurückbewegt zu werden. Beim Ausführungsbeispiel ist der Ventilkörper 16 durch Ventilkörperteile 16', 16", 16'" und 16"" gebildet, die fest, z. B. durch Schweißen miteinander verbunden sind. Mittels elastischer bzw. flexibler Packungen 26 sind die Betätigungsstifte 8, 9 im Ventilkörper 16 dicht geführt.

## Patentansprüche

1. Handstück für Mundduschen mit einem Ventilkörper (16) und einem an dem Ventilkörper dreh- und abnehmbar dicht ansteckbaren Düsenrohr (15) mit Einzelstrahl- (13) und Mehrstrahlaustritten (14) für die Duschflüssigkeit sowie einer mittels eines Stellschiebers (3) betätigbaren Steuereinrichtung, die wahlweise getrennte Abläufe für den Einzelstrahlaustritt oder die Mehrstrahlaustritte an einem gemeinsamen Zulauf anlegt bzw. vom Zulauf trennt und bei dem der Stellschieber (3) mittels eines Nockens (20) in den Offenstellungen der Verschlußstücke ein Halteglied in eine Ausnehmung des Düsenrohres einschwenkt und in der Schließstellung aus der Ausnehmung freigibt, dadurch gekennzeichnet, daß die Abläufe (13, 14) für den Einzelstrahl- und die Mehrstrahlaustritte durch als Steuereinrichtung dienende verschiebliche Verschlußstücke (10, 11) kontrollierbar sind, daß die Verschlußstücke (10, 11) durch ein durch den Stellschieber (3) verschiebliches Kurvenstück (7) in der Schließstellung haltbar bzw. unabhängig nacheinander in die Offenstellungen bringbar sind, wobei das Kurvenstück (7) durch einen ebenen Streifenteil mit einer im wesentlichen v-förmigen Ausbiegung (7') gebildet ist, deren Höhe dem maximalen Hub der Ventilstößel (10, 11) entspricht und in Schlitzungen der Verschleißstücke (10, 11) geführt ist, und daß der Stellschieber (3) mittels des durch ihn verschieblichen Nockens (20) einen am Ventilkörper (16) angelenkten Sperrhebel (19) zur Fixierung oder Freigabe des Düsenrohres (15) am oder vom Ventilkörper (16) betätigt.

2. Handstück nach Anspruch 2, dadurch gekennzeichnet, daß das Kurvenstück (7) und der Nocken (20) an einer Führungsschiene (6) ausgebildet sind, die mit dem Stellschieber (3) fest verbunden ist.

3. Handstück nach Anspruch 1, dadurch gekennzeichnet, daß der Nocken (20) durch einen Streifenteil gebildet ist, der sich in den Schließstellungen der Verschlußstücke (10, 11) im Abstand den Sperrhebel (19) mittels einer an dem dem Sperrhebel (19) zugewandten Ende angeordneten schrägen oder bogenförmigen Anlauffläche (25) betätigt.

4. Handstück nach Anspruch 1, dadurch gekennzeichnet, daß zwischen dem Kurvenstück (7) und den Verschlußstücken (10, 11) Betätigungsstifte (8, 9) ausgebildet sind, die die Schlitzungen (23) tragen, in die das Kurvenstück (7) geführt wird.

5. Handstück nach Anspruch 4, dadurch gekennzeichnet, daß die Betätigungsstifte (8, 9) mit den Verschlußstücken (10, 11) fest verbunden sind.

6. Handstück nach Anspruch 5, dadurch gekennzeichnet, daß die Betätigungsstifte (8, 9) getrennt von den Verschlußstücken (10, 11) ausgebildet und auf den Verschlußstücken (10, 11) frei abgestützt sind.

7. Handstück nach Anspruch 1, dadurch gekennzeichnet, daß der Sperrhebel (19) durch einen Winkelhebel gebildet ist, der in den Offenstellungen der Verschlußstücke (10, 11) mit einem Hebelarm (19'') auf den Nocken (20) aufschiebbar und mit dem anderen Hebelarm (19') in eine Düsenrohrausnehmung (17) einschwenkbar ist.

8. Handstück nach Anspruch 1, dadurch gekennzeichnet, daß der Ventilkörper (16) durch mehrere miteinander axial fest aneinandergefügte Ventilkörperteile (16', 16'', 16''', 16'''') gebildet ist, von denen einer (16') einen Anschlußnippel für den Zulauf (12), ein anderer (16'') die Verschlußstücke (10, 11) aufnimmt, während weitere (16''') den Sperrhebel (19) tragen und ein Teilstück einer zylindrischen Aufnahme für das Düsenrohr (15) bzw. ein anderer (16'''') ein weiteres Teilstück der zylindrischen Aufnahme für das Düsenrohr (15) aufweisen.

9. Handstück nach Anspruch 1, dadurch gekennzeichnet, daß der Ventilkörper (16) in handstückbildende Schalenteile (1') einsteck- und fixierbar ist, die mittels abgespreizt hinter Stützflächen (2) greifende Rastenkörper aneinander festgelegt sind.

10. Handstück nach Anspruch 1, 2 und 3, dadurch gekennzeichnet, daß das Kurvenstück (7) durch zwei nebeneinander angeordnete Kurvenstücke ersetzt ist, die mittels des Stellschiebers (3) verschieblich ausgebildet sind und je eine Ausbiegung (7') aufweisen, die getrennt unabhängig je ein Verschlußstück (10 oder 11) in Schließstellung halten bzw. in Offenstellung verbringen.

## Claims

1. A handpiece for oral sprays with a valve body (16) a nozzle tube (15) rotarily and removably mountable tightly thereon, said nozzle tube (15) having single-jet (13) and multi-jet (14) outlet ports for the spray liquid and a control device activable by means of a valve gate (3), said control device selectably connecting or isolating from a common inlet separate discharge openings for the single-jet or the multi-jet outlet ports, and in which the valve gate (3), in the open positions of the closure parts, pivots a retaining member into a recess in the nozzle tube by means of a cam (20), and in the closed position releases said retaining member from the recess, characterised in that the outlet ports (13, 14) for the single-jet and multi-jet outlets may be controlled by movable closure parts (10, 11) serving as a control device, that the closure parts (10, 11) may be held in the closed position or may be brought independently of one another into the open positions by means of a curved part (7) movable by the valve gate (3), the curved part (7) being formed by a planar strip part with a substantially V-shaped bent section (7'), whose height corresponds to the maximum lift of the valve plungers (10, 11), and which is guided in slots (23) in the closure parts (10, 11), and that the valve gate (3), by means of a cam (20) which is movable thereby, activates a catch lever (19) jointed to the valve body (16) in order to secure or release the nozzle tube (15) on or from the valve body (16).

2. A handpiece according to Claim 2, characterised in that the curved part (7) and the cam (20) are formed on a guide rail (6) which is securely attached to the valve gate (3).

3. A handpiece according to Claim 1, characterised in that the cam (20) is formed by a strip part which, in the closed positions of the closure parts (10, 11), activates at a distance the catch lever (19) by means of an oblique or arcuate ramp face (25) located at the end facing the catch lever (19).

4. A handpiece according to Claim 1, characterised in that there are provided between the curved part (7) and the closure parts (10, 11) control pins (8, 9) having the slots (23) in which the curved part (7) is guided.

5. A handpiece according to Claim 5, characterised in that the control pins (8, 9) are securely attached to the closure parts (10, 11).

6. A handpiece according to Claim 5, characterised in that the control pins (8, 9) are designed as separate from the closure parts (10, 11), and are freely supported on the closure parts (10, 11).

7. A handpiece according to Claim 1, characterised in that the catch lever (19) is formed by a bellcrank lever which, in the open positions of the closure parts (10, 11) may be pushed with one lever arm (19") on to the cam (20), and may be pivoted into a recess (17) in the nozzle tube by the other lever arm (19').

8. A handpiece according to Claim 1, characterised in that the valve body (16) is formed by several valve body parts (16', 16", 16"', 16"") jointed tightly together, of which one (16') accommodates a connector nipple for the inlet (12), another (16") the closure parts (10, 11), while others (16"') carry the catch lever (19) and part of a cylindrical housing for the nozzle tube (15), while another (16"") has a further part of the cylindrical housing for the nozzle tube (15).

9. A handpiece according to Claim, characterised in that the valve body (16) may be thrust into and fixed in shell parts (1') forming the handpiece, said shell parts (1') being secured to one another by means of spread-apart locking elements which engage behind support surfaces (2).

10. A handpiece according to Claims 1, 2 and 3, characterised in that the curved part (7) is replaced by two curved parts located next to one another, and which are designed to be movable by means of the valve gate (3), each having a bent section (7'), each of which separately and independently holds in the closed position or brings into the open position a respective closure part (10 or 11).

## Revendications

1. Porte-outil pour douchettes buccales, comportant un corps de soupape (16) et un tube de buse (15), enfichable de façon étanche sur le corps de soupape en pouvant tourner et en étant amovible, ayant des sorties à jet unique (13) et à plusieurs jets (14) pour le liquide de lavage, ainsi qu'un dispositif de commande actionnable au moyen d'un coulisseau de réglage (3), qui, au choix, relie des écoulements séparés pour la sortie de jet unique ou les sorties des jets multiples à une alimentation commune, ou les sépare de l'alimentation, et dans lequel le coulisseau de réglage (3) fait pivoter un organe de maintien dans un évidement du tube de buse, dans les positions ouvertes des obturateurs, au moyen d'une came (20) et, dans la position fermée, le libère de l'évidement, caractérisé en ce que les écoulements (13, 14) pour la sortie à jet unique et les sorties à plusieurs jets peuvent être contrôlés par des obturateurs mobiles (10, 11) servant de dispositif de commande, en ce que les obturateurs (10, 11) peuvent être maintenus dans la position fermée par une pièce courbée (7) déplaçable par le coulisseau de réglage (3), ou être amenés indépendamment l'un après l'autre dans les positions ouvertes, la pièce courbée (7) étant formée d'une partie de bande plane présentant un cintrage (7') généralement en forme de V, dont la hauteur correspond à la course maximale des poussoirs de soupape (10, 11) et qui est guidée dans des fentes (23) des obturateurs (10, 11), et en ce que le coulisseau de réglage (3) actionne, au moyen de la came (20) mobile à travers celui-ci, un levier d'arrêt (19) articulé au corps de soupape (16) pour la fixation du tube de buse (15) sur le corps de soupape (16), ou sa libération de celui-ci.

2. Porte-outil selon la revendication 1, caractérisé en ce que la pièce courbée (7) et la came (20) sont réalisées sur un rail de guidage (6), qui est solidaire du coulisseau de réglage (3).

3. Porte-outil selon la revendication 1, caractérisé en ce que la came (20) est formée par une partie de bande, qui est actionnée, dans les positions fermées des obturateurs (10, 11), à distance du levier d'arrêt (19), au moyen d'une surface de butée (25) inclinée ou arquée, agencée à l'extrémité proche du levier d'arrêt (19).

4. Porte-outil selon la revendication 1, caractérisé en ce que, entre la pièce courbée (7) et les obturateurs (10, 11), sont prévues des broches d'actionnement (8, 9), qui portent les fentes (23) dans lesquelles est guidée la pièce courbée (7).

5. Porte-outil selon la revendication 4, caractérisé en ce que les broches d'actionnement (8, 9) sont solidaires des obturateurs (10, 11).

6. Porte-outil selon la revendication 4, caractérisé en ce que les broches d'actionnement (8, 9) sont réalisées en étant séparées des obturateurs (10, 11) et s'appuient librement sur les obturateurs (10, 11).

7. Porte-outil selon la revendication 1, caractérisé en ce que le levier d'arrêt (19) est formé par un levier coudé, qui, dans les positions ouvertes des obturateurs (10, 11), peut coulisser sur la came (20) par un bras de levier (19") et peut pivoter dans un évidement (17) du tube de buse par l'autre bras de levier (19').

8. Porte-outil selon la revendication 1, caractérisé en ce que le corps de soupape (16) est formé de plusieurs parties (16', 16", 16"', 16"") jointes l'une à l'autre de façon axialement fixe, desquelles une (16') reçoit un embout de raccordement pour l'alimentation (12), une autre (16") les obturateurs (10, 11), tandis que d'autres (16"') portent le levier d'arrêt (19) et présentent un tronçon d'un logement cylindrique pour le tube de buse (15), ou une autre (16"") un autre tronçon du logement cylindrique pour le tube de buse (15).

9. Porte-outil selon la revendication 1, caractérisé en ce que le corps de soupape (16) est enfichable et fixable dans des parties de coquille (1') formant le porte-outil, qui sont fixées l'une à l'autre par des corps d'encliquetage s'engageant derrière des surfaces d'appui (2), en étant écartés.

10. Porte-outil selon les revendications 1, 2 et 3, caractérisé en ce que la pièce courbée (7) est remplacée par deux pièces courbées agencées l'une à côté de l'autre, qui sont réalisées en étant déplaçables au moyen du coulisseau de réglage (3) et présentent, chacune, un cintrage (7'), qui, indépendamment, maintiennent en position fermée ou amènent en position ouverte, chacun, un obturateur (10, ou 11).